# EUROPEAN PATENT APPLICATION

(11) **EP 2 624 130 A2**
(43) Date of publication of application: **07.08.2013**
(21) Application number: 12181386.9
(22) Date of filing: 22.08.2012
(51) Int. Cl.: G06F 9/445, G06F 9/44

(54) **Electronic systems and host devices and management methods using the same**

(30) Priority: 21.10.2011 TW 100138221
(71) Applicant: Acer Incorporated, Taipei Hsien 221 (TW)
(72) Inventor: Lin, Yu-Ting, 221 Taipei Hsien (TW); Hsieh, Ho-Kuang, 221 Taipei Hsien (TW)
(74) Representative: Becker Kurig Straus

(57) **Abstract**

Management methods for use in an electronic system having electronic devices and a host device in daisy-chain configuration are provided. The host device has a configuration setting. First, an arrangement sequence among the host device and the electronic devices is detected. Then, the configuration setting of the host device is adjusted according to the detected arrangement sequence of the host device and the electronic devices such that the host device uses the electronic devices to perform a specific operation corresponding to the detected arrangement sequence.

## Description

### CROSS REFERENCE TO RELATED APPLICATIONS

This Application claims priority of Taiwan Application No. 100138221, filed on Oct. 21, 2011, and the entirety of which is incorporated by reference herein.

### BACKGROUND OF THE INVENTION

### Field of the Invention

The disclosure relates generally to electronic systems and related management methods, and, more particularly to electronic systems with a plurality of devices that are connected in a daisy-chain configuration and related management methods.

### Description of the Related Art

Recently, with vigorous development of computers and communications industry, various peripheral devices can easily be connected to a host device such as a personal computer (PC), a notebook PC and so on, including internet and external storage devices and so on. Further, for the peripheral devices, in addition to original functions, different functions can be appropriately set to support different capabilities. For example, assume that two hard discs are included in a peripheral device, the two hard discs can be separately utilized as a common hard disc directly or commonly set as a disk array (RAID), wherein one of the hard discs can be served as the RAID mirror of another hard disc. However, the change of settings of system or software, all need to go through software user interfaces, the user usually requires to manually change various software settings, so that various functions of peripheral devices can be used. For example, assume that the user has two hard discs, when the user wants to set a RAID with these two discs, a series of software setting steps are required to change the related settings, so that these two hard discs can be equipped with RAID mirror function. When other users use this computer, often not knowing why with two hard discs, whereas only one hard disc can be seen from the system, and the user needs to operate a RAID software, so that it can be found that these two hard discs had already been set as RAID with RAID mirror function. In addition, the system settings can not be found from the visual appearance by the user, leading to quite inconvenient in use.

### BRIEF SUMMARY OF THE INVENTION

Electronic systems and management methods using the same are provided.

In an embodiment, a management method of an electronic system having electronic devices and a host device connected in a daisy-chain configuration is provided, wherein the host device has a configuration setting. The management method of the electronic system comprises the steps of detecting an arrangement sequence of the host device and the electronic devices and adjusting the configuration setting of the host device according to the detected arrangement sequence of the host device and the electronic devices such that the host device uses the electronic devices to perform a specific operation corresponding to the detected arrangement sequence.

Another embodiment of an electronic system comprises a plurality of electronic devices and a host device. The host device and the electronic devices are connected in a daisy-chain configuration. The host device has a configuration setting and is used for detecting an arrangement sequence of the host device and the electronic devices and adjusting the configuration setting of the host device according to the detected arrangement sequence of the host device and the electronic devices such that the host device uses the electronic devices to perform a specific operation corresponding to the detected arrangement sequence.

Another embodiment of a host device connected to a plurality of electronic devices in a daisy-chain configuration comprises a detection unit and a configuration and adjustment module. The detection unit is arranged for detecting an arrangement sequence of the host device and the electronic devices. The configuration and adjustment module is coupled to the detection unit and is arranged for receiving the detected arrangement sequence of the host device and the electronic devices and adjusting the configuration setting of the host device according to the detected arrangement sequence of the host device and the electronic devices such that the host device uses the electronic devices to perform a specific operation corresponding to the detected arrangement sequence.

Management methods may take the form of a program code embodied in a tangible media. When the program code is loaded into and executed by a machine, the machine becomes an apparatus for practicing the disclosed method.

### BRIEF DESCRIPTION OF THE DRAWINGS

The invention will become more fully understood by referring to the following detailed description with reference to the accompanying drawings, wherein:

Fig. 1 is a schematic diagram illustrating an embodiment of an electronic system of the invention;

Figs. 2A and 2B are schematic diagrams illustrating embodiments of the configuration sequence of the invention;

Fig. 3 is a flowchart of an embodiment of a management method of the invention;

Fig. 4 is a flowchart of another embodiment of a management method of the invention;

Figs. 5A and 5B are schematic diagrams illustrating embodiments of the configuration sequence of the electronic system of the invention;

Figs. 6A and 6B are schematic diagrams illustrating another embodiments of the configuration sequence of the electronic system of the invention; and

Figs. 7A and 7B are schematic diagrams illustrating other embodiments of the configuration sequence of the electronic system of the invention.

### DETAILED DESCRIPTION OF THE INVENTION

The following description is of the best-contemplated mode of carrying out the invention. This description is made for the purpose of illustrating the general principles of the invention and should not be taken in a limiting sense. The scope of the invention is best determined by reference to the appended claims.

Embodiments of the invention provide electronic systems and related device management methods capable of automatically modifying software settings of connected hardware devices in accordance with any variation of corresponding arrangement position of connection of external electronic devices or activating new software application generated in accordance with the connection order.

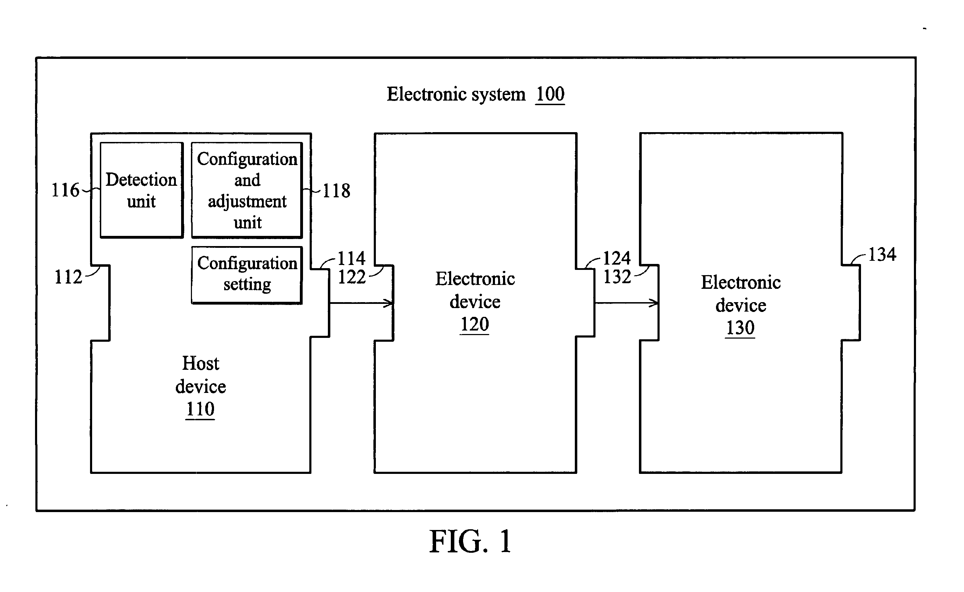

Fig. 1 is a schematic diagram illustrating an embodiment of an electronic system of the invention. As shown in Fig. 1, the electronic system 100 of the invention comprises at least a host device 110 and a plurality of electronic devices 120 and 130. The host device 110 may include computer systems, such as personal computers, handhold devices and portable devices, e.g. a laptop computer, a PDA (personal digital assistant), a network computer, a mini-computer or any other type of similar devices. However, it is to be understood that the invention is not limited thereto. The electronic device 120 or the electronic device 130 may be any type of peripheral device or hardware component. For example, the electronic device 120 or 130 may be an optical disk drive, a hard disk driver (HDD), a graphics processing unit (GPU) device, a speaker and so on, but it is not limited thereto. Each of the host device 110 and the electronic devices 120 and 130 may have a high speed transmission interface, e.g., a Thunderbolt or Light Peak interface such that the electronic devices 120 and 130 may use a transport protocol compatible with a specific high speed transmission interface to communicate with the host device 110. The host device 110 and the electronic devices 120 and 130 are connected together in a daisy chain configuration. Wherein, each of the host device 110 and the electronic devices 120 and 130 has two connecting ends respectively, and one of the connecting end may be connected to any one of the connecting end of any one of the electronic device, and the other connecting end can be connected to one of the connecting end of another electronic device, so that those can be daisy chain configuration connected. For example, two connecting ends may be physically a male and a female form respectively, so that connection made easy, but the invention is not limited thereto. In practice, each connecting end may perform data input and output for data transmission. It is to be noted that, the number and the type of the electronic devices are provided for illustration, but are not limited thereto, any electronic device having the thunderbolt interface or any interface faster than the thunderbolt interface or electronic devices which are connected in a daisy chain configuration may be serve as electronic device embodiments of the invention.

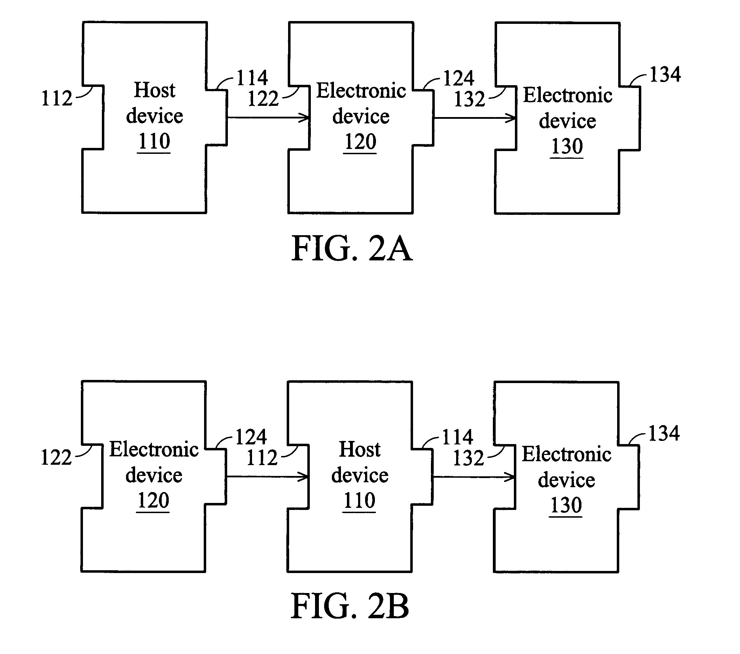

The host device 110 may further include a connecting end 112, a connecting end 114, a detection unit 116 and a configuration and adjustment unit 118. The connecting end 112 or 114 can be equipped with a connecting interface such as a high speed transmission interface for connecting to the responsive connecting end of the electronic device with same connecting interface. The detection unit 116 is arranged for detecting and monitoring an arrangement sequence among the host device 110 and the electronic devices 120 and 130 which are serially connected/cascaded to each other and the host device 110 and issue a message to the configuration and adjustment unit 118 when detecting a change in the arrangement sequence among the host device 110 and the electronic devices 120 and 130. Because the host device 110 and the electronic devices 120 and 130 are connected in a daisy chain configuration, various configuration sequences may be generated by exchanging their cascaded position of the arrangement sequence among the host device 110 and the electronic devices 120 and 130. Please refer to Figs. 2A and 2B, which are schematic diagrams illustrating embodiments of the configuration sequence of the invention. As shown in Fig. 2A, the connecting end 114 of the host device 110 is connected to the connecting end 122 of the electronic device 120 and the connecting end 124 of the electronic device 120 is connected to the connecting end 132 of the electronic device 130. In this case, the detection unit 116 detects that the host device 110 and the electronic devices 120 and 130 are connected together with a first arrangement sequence. In other words, in the first arrangement sequence, the electronic devices 120 and 130 are disposed on the same side of the host device 110. In another embodiment, as shown in Fig. 2B, the connecting end 112 of the host device 110 is connected to the connecting end 124 of the electronic device 120 and the connecting end 114 of the host device 110 is connected to the connecting end 132 of the electronic device 130. In this case, the detection unit 116 detects that the host device 110 and the electronic devices 120 and 130 are connected together with a second arrangement sequence. In other words, in the second arrangement sequence, the electronic devices 120 and 130 are disposed on one opposite side of the host device 110, i.e. disposed on two sides of the host device 110.

Note that the number, the type and the arrangement sequence of the electronic devices are provided for illustration, but are not limited thereto. In some embodiments, the electronic system 100 may include more than two electronic devices and thus the electronic system 100 may have more combinations of possible arrangement sequence.

The configuration and adjustment unit 118 which is coupled to the detection unit 116 is arranged for adjusting related system configuration setting values according to the arrangement sequence data detected by the detection unit 116. The host device 110 may have a configuration setting for setting the configurations of the electronic devices 120 and 130 to determine the use manners of the electronic devices 120 and 130. For example, the electronic devices 120 and 130 may be arranged for performing a first operation when the configuration setting of the host device 110 is set to be a first configuration while the electronic devices 120 and 130 may be arranged for performing a second operation when the configuration setting of the host device 110 is set to be a second configuration. Therefore, the configuration and adjustment unit 118 may use the electronic devices 120 and 130 to perform different operations by adjusting the configuration setting value of the host device 110. The responsive management method will be discussed further in the following paragraphs.

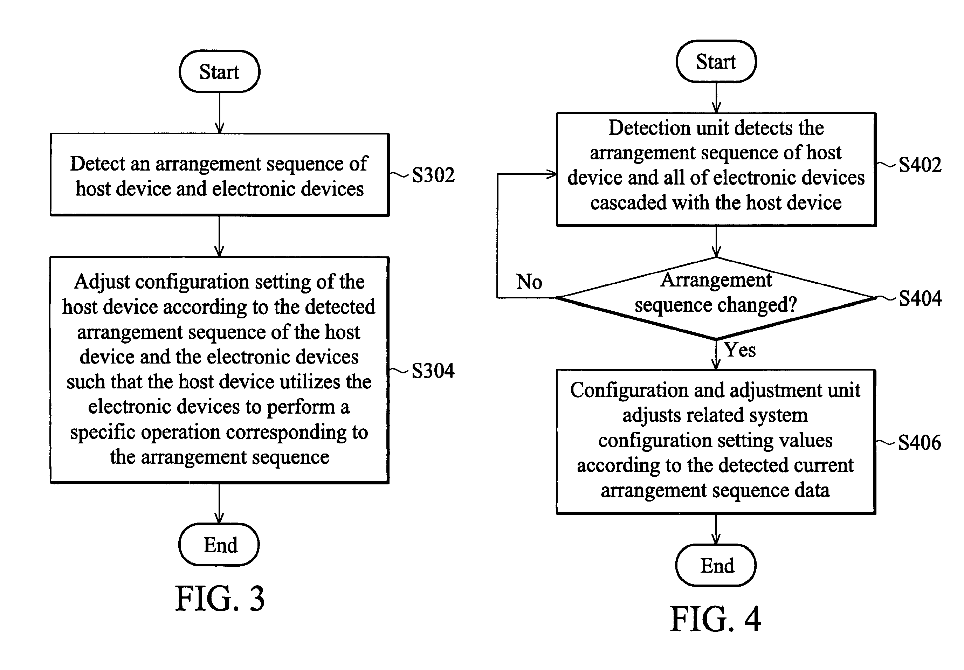

Fig. 3 is a flowchart of an embodiment of a management method of the invention. Please refer to Figs. 1 and 3. The management method can be applied to the host device 110 of the electronic system 100 for determining the configuration setting of the system 100 according to the arrangement sequence among the devices 110, 120 and 130. First, in step S302, the detection unit 116 detects an arrangement sequence of the host device 110 and the electronic devices 120 and 130. In some embodiments, the detection unit 116 detects the arrangement sequence of the host device 110 and the electronic devices 120 and 130 may be performed by detecting whether relative arranged positions among the host device 110 and the electronic devices 120 and 130 has been changed. When the detection unit 116 detects the arrangement sequence of the host device 110 and the electronic devices 120 and 130, it sends a message to the configuration and adjustment unit 118, wherein the message includes detected arrangement sequence data. For example, referring to Figs. 2A and 2B, when the arrangement sequence of the host device 110 and the electronic devices 120 and 130 is changed from the first arrangement sequence (Fig. 2A) to a second arrangement sequence (Fig. 2B), the detection unit 116 detects that the arrangement sequence of the host device 110 and the electronic devices 120 and 130 has been changed and thus sends a message including the second arrangement sequence to the configuration and adjustment unit 118. When receiving the message including the arrangement sequence data from the detection unit 116, then, in step S304, the configuration and adjustment unit 118 adjusts the configuration setting of the host device 110 according to the detected arrangement sequence of the host device 110 and the electronic devices 120 and 130 such that the host device 110 utilizes the electronic devices 120 and 130 to perform a specific operation corresponding to the arrangement sequence. Note that the host device 110 may obtain a current arrangement sequence data from the aforementioned message and then adjust the configuration setting of the host device 110 according to the current arrangement sequence data. For example, assume that the host device is a personal computer PC and the electronic devices 120 and 130 are hard discs HDA and HDB respectively, the configuration and adjustment unit 118 may configure the configuration settings of the HDA and HDB to serve as two independent hard discs for use if the detection unit 116 detects that the arrangement sequence of the PC, HDA and HDB is PC->HDA->HDB while the configuration and adjustment unit 118 may configure the configuration settings of the HDA and HDB to serve as a disk array to perform a disk array operation using the HDA and HDB if the detection unit 116 detects that the arrangement sequence of the PC, HDA and HDB is HDB->PC->HDA. Thus, the configuration and adjustment unit 118 can adjust the configuration setting of the host device 110 according to the current arrangement sequence of the host device 110 and the electronic devices 120 and 130 such that the host device 110 can utilize the electronic devices 120 and 130 to perform a specific operation corresponding to the arrangement sequence.

Detail descriptions of the detection of the arrangement sequence and related adjustment processes of the configuration setting will be discussed further in the following paragraphs.

Fig. 4 is a flowchart of another embodiment of a management method of the invention. Please refer to Figs. 1 and 4. The management method can be applied to the host device 110 of the electronic system 100 for determining the configuration setting of the system 100 according to the arrangement sequence among the devices 110, 120 and 130.

First, in step S402, the detection unit 116 detects the arrangement sequence of the host device 110 and all of the electronic devices 120 and 130 cascaded with the host device 110 and then in step S404, determines whether the arrangement sequence has been changed. If not, the process returns to perform step S402 to continually detect the arrangement sequence of the host device 110 and the electronic devices 120 and 130. If the detection unit 116 detects that the arrangement sequence of the host device 110 and the electronic devices 120 and 130 has been changed (Yes in step S404), which indicates that the cascaded positions among the host device 110 and the electronic devices 120 and 130 has been changed, adjustment of the configuration setting of the system 100 may be required so that the detection unit 116 sends a message to the configuration and adjustment unit 118, wherein the message may include detected current arrangement sequence data. For example, referring to Figs. 2A and 2B, when the arrangement sequence of the host device 110 and the electronic devices 120 and 130 is changed from the first arrangement sequence (Fig. 2A) to the second arrangement sequence (Fig. 2B), the detection unit 116 will detect that the arrangement sequence of the host device 110 and the electronic devices 120 and 130 has been changed and thus sends a message including the second arrangement sequence to the configuration and adjustment unit 118. Similarly, when the arrangement sequence of the host device 110 and the electronic devices 120 and 130 is changed back to the first arrangement sequence from the second arrangement sequence or to a third arrangement sequence, the detection unit 116 will detect that the arrangement sequence of the host device 110 and the electronic devices 120 and 130 has been changed and thus sends a message including the first or third arrangement sequence to the configuration and adjustment unit 118 respectively.

When receiving the message sent by the detection unit 116, in step S406, the configuration and adjustment unit 118 adjusts related system configuration setting values according to the detected current arrangement sequence data of the host device 110 and the electronic devices 120 and 130. Wherein, the configuration and adjustment unit 118 adjusts related system configuration setting values may comprise, for example, adjust responsive system hardware setting value, activate responsive software applications, activate/install responsive drivers, display responsive user interface and so on, but the invention is not limited thereto.

In some embodiments, the host device 110 may further comprise a table which records a plurality of predefined arrangement sequences and responsive configuration settings and that the configuration and adjustment unit 118 adjusts the related system configuration setting values according to the current arrangement sequence data detected by the detection unit 116 is performed by finding a configuration setting corresponding to the current arrangement data from the table by table lookup with the current arrangement data as an index and then automatically adjust the system configuration to the found configuration setting. In some embodiments, the host device 110 may further provide a user interface (not shown) for the user such that the user may revise, configure or select from the table the responsive configuration setting of each arrangement sequence in advance via the user interface.

Because the configuration and adjustment unit 118 can automatically adjust responsive configuration setting according to different arrangement sequence detected, manual modification of related configuration setting is not needed by the user. Moreover, the user may intuitively recognize the way that the electronic devices 120 and 130 are currently being utilized according to the arrangement sequence among the host device 110 and the electronic devices 120 and 130 or the user may assign the way that the electronic devices 120 and 130 are being utilized by cascading/arranging the host device 110 and the electronic devices 120 and 130 in a specific arrangement sequence, thereby increasing the fun for use and practicability for the user.

In addition, as the detection unit 116 will continually detect the arrangement sequence of the host device 110 and the electronic devices 120 and 130, the configuration and adjustment unit 118 can also restore to the original system configuration setting automatically if the arrangement sequence is changed back to the original arrangement sequence.

In some embodiments, the detection unit 116 may further determine whether the arrangement sequence of the host device 110 and the electronic devices 120 and 130 has been changed by determining whether the electronic devices 120 and 130 are disposed on the same side or opposite sides of the host device 110. For example, when the arrangement of the electronic devices 120 and 130 are changed from disposed on the same side (e.g. both on the left side or the right side of the host devices) to deposed on the left side and the right side of the host device 110 respectively, the detection unit 116 determines that arrangement sequence of the host device 110 and the electronic devices 120 and 130 has been changed.

For explanation, specific arrangement sequences and operations of management methods are illustrated as examples in this embodiment, and those skilled in the art will understand that the present invention is not limited thereto.

In the following embodiments, the electronic devices 120 and 130 may perform at least a first operation and a second operation and the configuration and adjustment unit 118 adjusts the configuration setting of the host device 110 to a first configuration according to a first arrangement sequence (as shown in Fig. 2A) such that the electronic devices 120 and 130 may be utilized to perform the first operation when the detection unit 116 detects that the arrangement sequence of the host device 110 and the electronic devices 120 and 130 is the first arrangement sequence while the configuration and adjustment unit 118 adjusts the configuration setting of the host device 110 to a second configuration according to a second arrangement sequence different from the first arrangement sequence (as shown in Fig. 2B) such that the electronic devices 120 and 130 may be utilized to perform the second operation when the detection unit 116 detects that the arrangement sequence of the host device 110 and the electronic devices 120 and 130 is the second arrangement sequence. In addition, in the following embodiments, it is assumed that the host device 110 is a personal computer (PC) and the electronic devices 120 and 130 can be peripheral devices with same or different type, such as hard disc drives (HDD), memories, optical disc drives, speakers, display screens, graphics processing units (GPU), wireless communication modules such as a WIFI module that can establish a communication link with a WIFI network and so on, but it is not limited thereto.

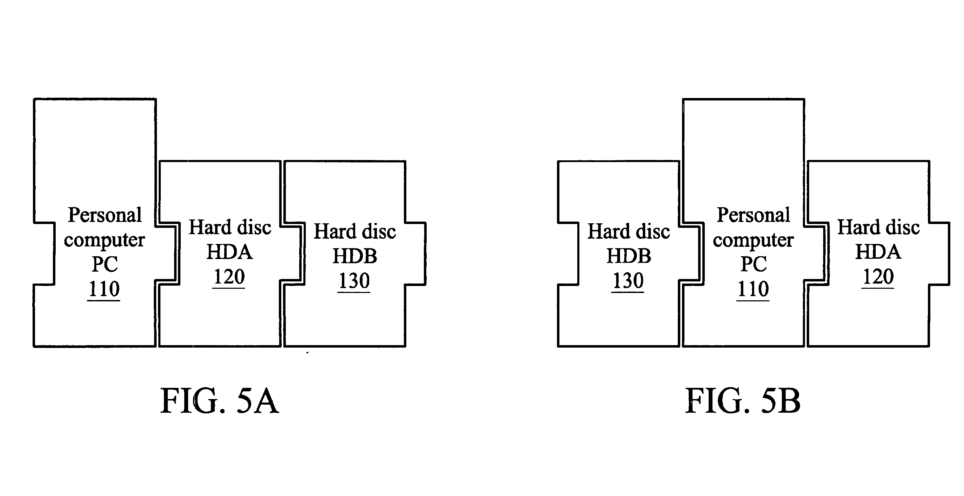

In the first embodiment, the electronic devices 120 and 130 are hard discs HDA and HDB respectively. Please refer to Figs. 5A and 5B. As shown in Fig. 5A, when the hard discs HDA and HDB are disposed on the same side of the personal computer PC, the detection unit 116 detects that the arrangement sequence of the PC, HDA and HDB is PC->HDA->HDB and the PC may serve the hard discs HDA and HDB as two independent hard discs. Thus, the configuration and adjustment unit 118 configure the configuration of the HDA and HDB to serve as two independent hard discs for use. Thereafter, as shown in Fig. 5B, when the hard discs HDA and HDB are disposed on the opposite sides of the PC, the detection unit 116 detects that the arrangement sequence of the PC, HDA and HDB is HDB->PC->HDA and the PC may serve the hard discs HDA and HDB together as a disk array. Thus, the configuration and adjustment unit 118 configure the configuration of the HDA and HDB to serve as a disk array to perform a disk array operation, wherein the hard disc HDB can be served as the RAID mirror of the HDA.

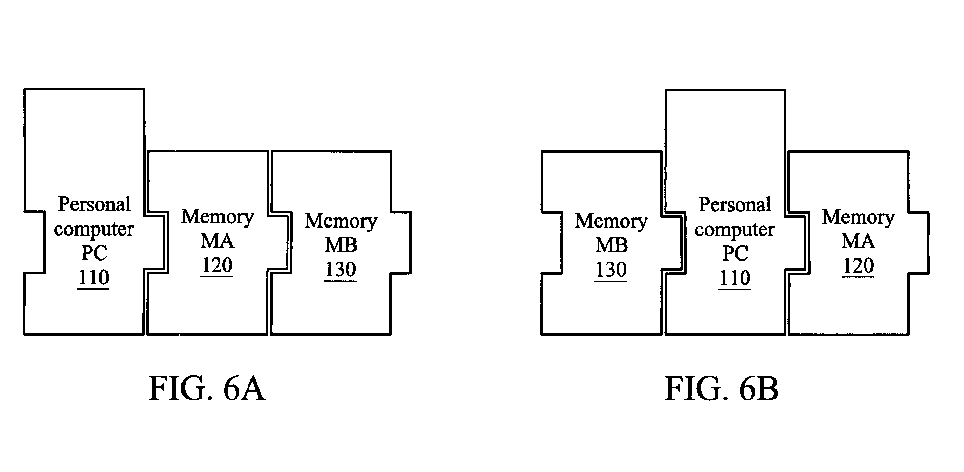

In the second embodiment, the electronic devices 120 and 130 are memory MA and memory MB respectively. Please Refer to Figs. 6A and 6B. As shown in Fig. 6A, when the memories MA and MB are disposed on the same side of the personal computer PC, the detection unit 116 detects that the arrangement sequence of the PC, MA and MB is PC->MA->MB and the PC may serve the memories MA and MB as an extended memory. Thus, the configuration and adjustment unit 118 configures the configuration of the MA and MB to serve as one extended memory for use. Thereafter, as shown in Fig. 6B, when the memories MA and MB are disposed on the opposite sides of the PC, the detection unit 116 detects that the arrangement sequence of the PC, MA and MB is MB->PC->MA and the PC may serve the memories MA and MB as two independent memories. Thus, the configuration and adjustment unit 118 may execute a virtualization software to change the system to a computer with two operation systems (OSs) A and B, wherein the OS A may apply the memory MA to be its used memory and the OS B may apply the memory MB to be its used memory. In some embodiments, when the memories MA and MB are disposed on the opposite sides of the PC, the PC may serve the memories MA and MB as two independent memories while the configuration and adjustment unit 118 may use the memory MA as the system memory and use the memory MB as a memory indicated for used by specific applications so as to improve the system performance without executing the aforementioned virtualization software.

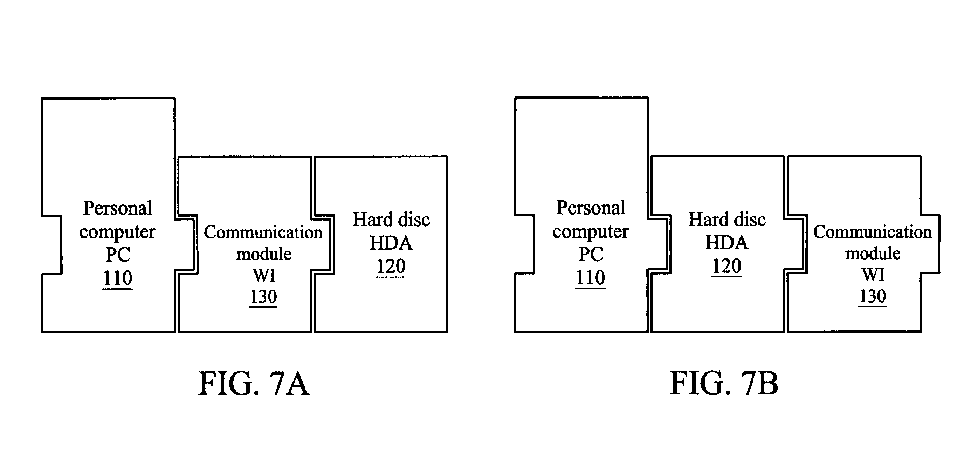

In the third embodiment, the electronic device 120 is the hard disc HDA while the electronic device is the WIFI communication module WI. Please Refer to Figs. 7A and 7B. As shown in Fig. 7A, when the arrangement sequence of the hard disc HDA, the WIFI communication module WI and the personal computer PC is PC->WI->HDA, the WIFI communication module WI is deposed between the hard disc HDA, which indicates that data stored in the hard disc HDA can be shared in a network through the WIFI communication module WI. Thus, the configuration and adjustment unit 118 configures the configuration setting of the HDA to serve as a sharable network hard disc such that other devices in the network may access the hard disc HDA through the WIFI communication module WI. Thereafter, as shown in Fig. 7B, the arrangement sequence of the HDA, the WI and the PC is PC->HDA->WI. In this case, the PC and the HDA are directly connected without the WIFI disposed therebetween, which indicates that data stored in the hard disc HDA will not be shared through the WI. Thus, the configuration and adjustment unit 118 configures the configuration setting of the HDA to use as a normal hard disc to disable the network sharing function for sharing the data in the HDA and configures the configuration setting of the WI to use as a normal wireless communication elements.

Therefore, the electronic systems and related management methods of the invention can detect the arrangement sequence of all hardware electronic devices linked to the host device in the electronic system, and can automatically, in accordance with corresponding arranged position of connection of external electronic devices, modify software settings of connected electronic device, or activate new software application generated in accordance with the connection sequence, thereby not only complexity of software settings can be reduced, but also new software allocation can be generated through reuse of the same hardware device, and thus greatly enhance fun for use and hardware flexibility of the electronic system, further meet use requirement for the user and enhance use willingness of the user. Moreover, the user can intuitively understand system software settings through the visual appearance of hardware arrangement sequence and thus the electronic system can be flexibly used to perform various operations.

Management methods, or certain aspects or portions thereof, may take the form of a program code (i.e., executable instructions) embodied in tangible media, such as floppy diskettes, CD-ROMS, hard drives, or any other machine-readable storage medium, wherein, when the program code is loaded into and executed by a machine, such as a computer, the machine thereby becomes an apparatus for practicing the methods. The methods may also be embodied in the form of a program code transmitted over some transmission medium, such as electrical wiring or cabling, through fiber optics, or via any other form of transmission, wherein, when the program code is received and loaded into and executed by a machine, such as a computer, the machine becomes an apparatus for practicing the disclosed methods. When implemented on a general-purpose processor, the program code combines with the processor to provide a unique apparatus that operates analogously to application specific logic circuits.

While the invention has been described by way of example and in terms of preferred embodiment, it is to be understood that the invention is not limited thereto. Those who are skilled in this technology can still make various alterations and modifications without departing from the scope and spirit of this invention. Therefore, the scope of the present invention shall be defined and protected by the following claims and their equivalent.

## Claims

1. A management method of an electronic system having electronic devices and a host device connected in a daisy-chain configuration, wherein the host device has a configuration setting, the method comprising:
detecting an arrangement sequence of the host device and the electronic devices; and
adjusting the configuration setting of the host device according to the detected arrangement sequence of the host device and the electronic devices such that the host device uses the electronic devices to perform a specific operation corresponding to the detected arrangement sequence.

2. The method of claim 1, wherein the step of adjusting the configuration setting of the host device according to the detected arrangement sequence of the host device and the electronic devices comprises:
detecting whether the arrangement sequence of the host device and the electronic devices has changed; and
when detecting that the arrangement sequence of the host device and the electronic devices has been changed, obtaining a current arrangement sequence data and adjusting the configuration setting of the host device according to the current arrangement sequence data.

3. The method of claim 2, wherein the step of detecting whether the arrangement sequence of the host device and the electronic devices has changed comprises:
detecting whether relative arranged position for the host device and the electronic devices has been changed.

4. The method of claim 3, wherein the step of detecting whether the relative arranged position for the host device and the electronic devices has been changed comprises:
determining whether the electronic devices are disposed on the same side or opposite sides of the host device.

5. The method of claim 1, wherein the electronic system performs a first operation or a second operation, and the step of adjusting the configuration setting of the host device according to the detected arrangement sequence of the host device and the electronic devices comprises:
when detecting that the arrangement sequence of the host device and the electronic devices is a first arrangement sequence, adjusting the configuration setting of the host device to a first configuration according to the first arrangement sequence such that the electronic system performs the first operation; and
when detecting that the arrangement sequence of the host device and the electronic devices is changed from the first arrangement sequence to a second arrangement sequence, adjusting the configuration setting of the host device to a second configuration according to the second arrangement sequence such that the electronic system performs the second operation,
wherein the second arrangement sequence is different from the first arrangement sequence.

6. The method of claim 5, further comprising:
when detecting that the arrangement sequence of the host device and the electronic devices is changed to the first arrangement sequence from the second arrangement sequence, automatically adjusting the configuration setting of the host device to the first configuration such that the electronic system performs the first operation.

7. The method of claim 5, further comprising:
providing a user interface for configuring the first configuration and the second configuration.

8. The method of claim 5, further comprising:
obtaining the first configuration corresponding to the first arrangement sequence or the second configuration corresponding to the second arrangement sequence by table lookup.

9. The method of claim 1, wherein the step of adjusting the configuration setting of the host device comprises:
adjusting a hardware setting value, a software setting value and activate/deactivate corresponding applications of the host device to perform the specific operation.

10. An electronic system, comprising:
a plurality of electronic devices; and
a host device, having a configuration setting for detecting an arrangement sequence of the host device and the electronic devices, and adjusting the configuration setting of the host device according to the detected arrangement sequence of the host device and the electronic devices such that the host device uses the electronic devices to perform a specific operation corresponding to the detected arrangement sequence,
wherein the host device and the electronic devices are connected in a daisy-chain configuration.

11. The electronic system of claim 10, wherein the host device further detects whether the arrangement sequence of the host device and the electronic devices has changed, when detecting that the arrangement sequence of the host device and the electronic devices has been changed, obtains a current arrangement sequence data and adjusts the configuration setting of the host device according to the current arrangement sequence data.

12. The electronic system of claim 11, wherein the host device detects whether the arrangement sequence of the host device and the electronic devices has changed by detecting whether relative arranged position for the host device and the electronic devices has been changed.

13. The electronic system of claim 10, wherein the electronic system performs a first operation or a second operation and upon detecting that the arrangement sequence of the host device and the electronic devices is a first arrangement sequence; the host device further adjusts the configuration setting of the host device to a first configuration according to the first arrangement sequence such that the electronic system performs the first operation, and upon detecting that the arrangement sequence of the host device and the electronic devices is changed from the first arrangement sequence to a second arrangement sequence, adjusts the configuration setting of the host device to a second configuration according to the second arrangement sequence such that the electronic system performs the second operation; wherein the second arrangement sequence is different from the first arrangement sequence.

14. A host device connected to a plurality of electronic devices in a daisy-chain configuration, comprising:
a detection unit, arranged for detecting an arrangement sequence of the host device and the electronic devices; and
a configuration and adjustment module, coupled to the detection unit, arranged for receiving the detected arrangement sequence of the host device and the electronic devices and adjusting the configuration setting of the host device according to the detected arrangement sequence of the host device and the electronic devices such that the host device uses the electronic devices to perform a specific operation corresponding to the detected arrangement sequence.
